# EUROPEAN PATENT APPLICATION

(11) **EP 2 733 349 A1**
(43) Date of publication of application: **21.05.2014**
(21) Application number: 13192196.7
(22) Date of filing: 08.11.2013
(51) Int. Cl.: F03B 3/18, F03B 11/04

(54) **Turbine distributor with wicket gate braking device**

(30) Priority: 16.11.2012 FR 1260940
(71) Applicant: ALSTOM Renewable Technologies, 38100 Grenoble (FR)
(72) Inventor: Meynet, Mathieu, 38100 Grenoble (FR); Bertea, Jean-Francois, 07300 Saint Jean De Muzols (FR)
(74) Representative: Navarro Fernández, Maria Isabel

(57) **Abstract**

This turbine distributor (100) comprises a gate operating ring (14), a set of wicket gates (16) designed to be oriented by the gate operating ring, and a set of assemblies (180) for connecting the wicket gates to the gate operating ring, wherein each connecting assembly (180) comprises a breaking member (22), the breaking member (22) being designed to break and thus separate the associated wicket gate (16) from the gate operating ring (14) in the event of excessive loads. It is characterized in that each connecting assembly (180) comprises a device (36) for braking the motion of the associated wicket gate (16) should the wicket gate separate from the gate operating ring (14). Specifically for use in Francis turbines.

## Description

The present invention relates to a turbine distributor comprising:
- a gate operating ring;
- a set of wicket gates designed to be oriented by the gate operating ring; and
- a set of assemblies for connecting the wicket gates to the gate operating ring,
   wherein each connecting assembly comprises a breaking member, the breaking member being designed to break and thus separate the associated wicket gate from the gate operating ring in the event of excessive loads.

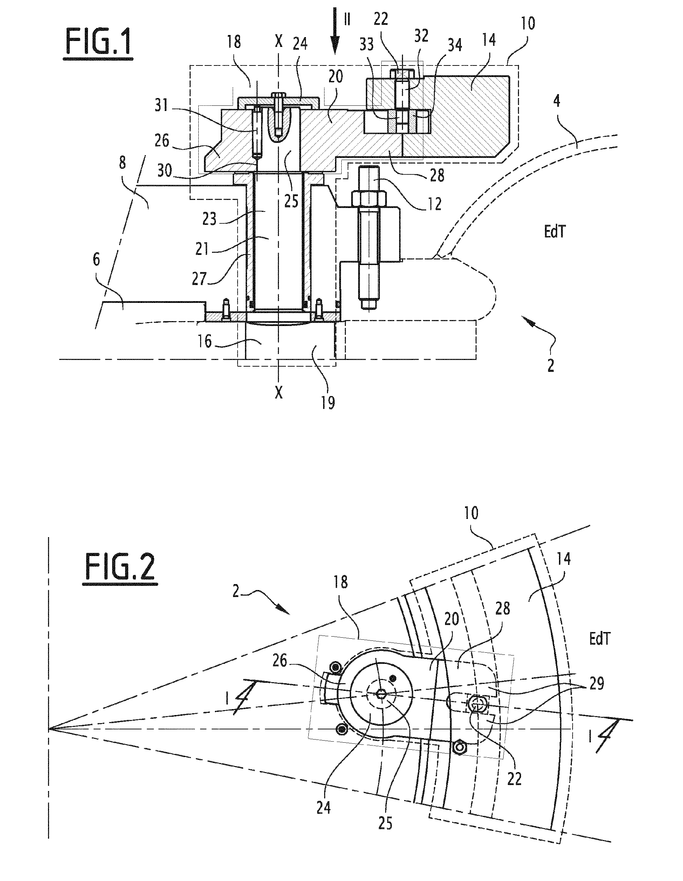

Such a turbine distributor is known and is depicted in figures 1 and 2. These figures show part of a Francis turbine 2. This Francis turbine 2 comprises a casing 4, a runner 6, a frame 8 and a distributor 10. The distributor 10 corresponds to the elements enclosed within the box drawn in dashed line. The frame 8 is attached to the casing 4 by means of bolts 12. The distributor 10 comprises a gate operating ring 14, a set of wicket gates 16 and a set of assemblies 18 for connecting the wicket gates 16 to the gate operating ring 14. It should be noted that figures 1 and 2 show only one wicket gate 16 and its associated connecting assembly 18, the other wicket gates 16 and connecting assemblies 18 being identical.

The wicket gate 16 comprises a vane 19 and a shank 21 which extends from the vane 19 along a vertical axis X-X. The shank 21 has a main part 23 and a top part 25. A bearing 27 supports the main part 23 inside the frame 8 such that the shank 21 and thus the wicket gate 16 can rotate, with respect to the frame 8, about the vertical axis X-X.

The connecting assembly 18 corresponds to the elements enclosed within the box drawn in solid line. The connecting assembly 18 comprises a lever 20, a breaking member 22 and a cap 24. The lever 20 is split into a central section 26 and an arm 28 which extends from the central section 26 toward the gate operating ring 14. The arm 28 has a forked portion 29. A housing 30 which accommodates the top part 25 is provided in the central section 26. The top part 25 is attached to the central section 26 by means of a pin 31. The breaking member is preferably a spindle 22 having a body 32 with a lower end 33. A nut 34 is in pivoting connection with the lower end 33 of the body 32. The spindle 22 passes through the gate operating ring 14 and its lower end 33, with the nut 34, is surrounded by the forked portion 29. The spindle 22 thus connects the lever 20 to the gate operating ring 14.

In the event of the wicket gate 16 becoming stuck, for example because of debris blocking the vane 19, the gate operating ring 14 is prevented from rotating. Attempting to make the gate operating ring 14 rotate then results in a load on the stuck wicket gate 16 which increases until the spindle 22 breaks, separating the gate operating ring 14 from the stuck wicket gate 16 such that the gate operating ring 14 can then rotate in order to control the other wicket gates. Thus, the breaking member 22 acts as a sort of "fuse" between the gate operating ring 14 and a faulty wicket gate 16.

However, once the stuck wicket gate 16 is separated from the gate operating ring 14, it can pivot in an uncontrolled manner about the axis X-X once the vane 19 comes free. There is then a risk of the wicket gate striking various parts of the turbine 2 and thus damaging itself or said parts. This risk increases, the greater the size and power of the turbine 2. This known turbine distributor is therefore mainly used in low-powered turbines used in "small" hydroelectric power stations (where "small" relates to a rating of less than or equal to approximately 10 MW). Use in "medium-sized" or "large" hydroelectric power stations (where "medium-sized" relates to a rating of between 10 and 100 MW and "large" relates to a rating of more than 100 MW) is advised against as it is dangerous.

The invention therefore has the objective of proposing a turbine distributor which also allows risk-free use in higher-powered turbines, in particular in "medium-sized" hydroelectric power stations.

Another objective of the invention is to retain, as far as is possible, the simplicity of the known turbine distributor.

According to the invention, these objectives are achieved with the aforementioned turbine distributor, **characterized in that** each connecting assembly comprises a device for braking the motion of the associated wicket gate should the wicket gate separate from the gate operating ring.

By providing a device for braking the wicket gate in the event of the breaking member breaking, uncontrolled pivoting of the free wicket gate is slowed to the point that damage is prevented, even at high turbine powers.

According to other embodiments, the turbine distributor according to the invention comprises one or more of the following features, considered in isolation or according to all technically possible combinations:
- the braking device comprises a braking body and a braking part, the braking body and the braking part being attached to one another by the breaking member;
- a braking lining is provided between the braking body and the braking part;
- the braking body is housed in the braking part such that the body and the part can rotate with respect to one another when the breaking member has broken;
- the braking body is associated with, and in particular attached to, the wicket gate;
- the braking body is a bushing which is fitted onto a shank of the associated wicket gate;
- the braking part is associated with the gate operating ring;
- the braking part is a clamping collar surrounding the braking body;
- a component for adjusting the tightness of the clamping collar, in particular an adjustment bolt; and
- each connecting assembly comprises a lever having a forked portion for connecting the lever to the gate operating ring.

The invention also relates to a Francis turbine fitted with a turbine distributor as defined hereinabove.

The invention will be better understood upon reading the following description, given purely as an example and with reference to the appended drawings, in which:
- figure 1 is a view in vertical section, in the direction of arrows I-I of figure 2, of part of a known Francis turbine;
- figure 2 is a top view, in the direction of arrow II of figure 1, of part of the known Francis turbine;
- figure 3 is a view in vertical section, in the direction of arrows III-III of figure 4, of part of a Francis turbine according to the invention; and
- figure 4 is a top view, in the direction of arrow IV of figure 3, of part of the Francis turbine according to the invention.

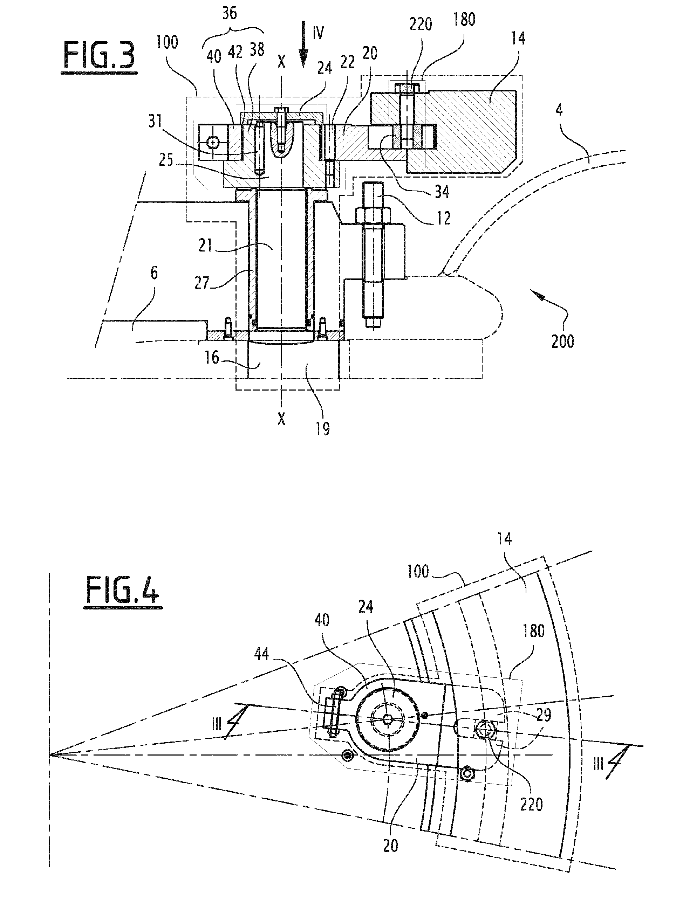

Figure 3 shows part of a Francis turbine 200 according to the invention. This is preferably a medium-power turbine, that is to say one rated between 10 and 100 MW.

Components of the turbine 200 which are identical to those of the known turbine 2 bear the same references. For a description of these, reference is made to the above description of figures 1 and 2. In the following, only the differences between the turbine 200 according to the invention and the known turbine 2 will be described.

The turbine 200 has a distributor 100 comprising a gate operating ring 14, a set of wicket gates 16 and a set of connecting assemblies 180. Each connecting assembly 180 comprises a lever 20 connected to the gate operating ring 14 by a spindle 220 and a nut 34. It should be noted that the sole purpose of the spindle 220 is to connect the lever 20 to the gate operating ring 14. The spindle 220 is not a breaking member.

Each connecting assembly 180 is fitted with a braking device 36. The braking device 36 comprises a braking body 38, a braking part 40 and a braking lining 42 located between the braking body 38 and the braking part 40. The braking body 38 and the braking part 40 are attached to one another by means of the breaking member, specifically a rod 22. The braking body 38 is housed so as to be able to rotate in the braking part 40, with the braking body 38 being prevented from rotating with respect to the braking part 40 by the breaking rod 22.

The braking body 38 is a bushing which is secured to the top part 25 of the shank 21 of the wicket gate 16 by means of a pin 31. The bushing 38 is connected in a rotationally fixed manner to the top part 25.

The braking part 40 is a clamping collar which is integrated into the lever 20 and surrounds the bushing 38. The clamping collar 40 is provided with a tightness-adjusting component, specifically an adjustment bolt 44.

The operation of the braking device 36 will now be described. First, the force for braking the wicket gates 16 in the event of the breaking member 22 breaking is adjusted by means of the adjustment bolts 44. The Francis turbine 200 is then set in motion. While the turbine 200 is in operation, the wicket gates 16 are regularly reoriented by means of the gate operating ring 14 in order to keep the turbine 200 at an optimal operating point. More precisely, the gate operating ring 14 controls the rotation of each wicket gate 16 via the sliding of the nut 34 in the forked portion 29 of the lever 20. If one of the wicket gates 16 becomes stuck, it will resist the next reorientation until the breaking rod 22 breaks. The gate operating ring 14 is then free from the stuck wicket gate 16, allowing the other wicket gates to be reoriented. By virtue of the rod 22 breaking, the bushing 38 is separated from the collar 40. Consequently, any uncontrolled movement of the faulty wicket gate results in the bushing 38 rotating inside the collar 40. This rotation (and thus the movement of the wicket gate) is braked by the braking lining 42. The braking force depends on the tightness of the collar 40.

By braking the erratic movement of the faulty wicket gate, damage to the turbine 200 is prevented.

## Claims

1. A distributor (100) for a turbine (200) comprising:
- a gate operating ring (14);
- a set of wicket gates (16) designed to be oriented by the gate operating ring (14); and
- a set of assemblies (180) for connecting the wicket gates (16) to the gate operating ring (14),
wherein each connecting assembly (180) comprises a breaking member (22), the breaking member (22) being designed to break and thus separate the associated wicket gate (16) from the gate operating ring (14) in the event of excessive loads,
**characterized in that** each connecting assembly (180) comprises a device (36) for braking the motion of the associated wicket gate (16) should the wicket gate separate from the gate operating ring (14).

2. The turbine distributor as claimed in claim 1, wherein the braking device (36) comprises a braking body (38) and a braking part (40), the braking body and the braking part being attached to one another by the breaking member (22).

3. The turbine distributor as claimed in claim 2, wherein a braking lining (42) is provided between the braking body and the braking part.

4. The turbine distributor as claimed in claim 2 or 3, wherein the braking body (38) is housed in the braking part (40) such that the body and the part can rotate with respect to one another when the breaking member (22) has broken.

5. The turbine distributor as claimed in any one of claims 2 to 4, wherein the braking body (38) is associated with, and in particular attached to, the wicket gate (16).

6. The turbine distributor as claimed in any one of claims 2 to 5, wherein the braking body is a bushing (38) which is fitted onto a shank (21) of the associated wicket gate.

7. The turbine distributor as claimed in any one of claims 2 to 6, wherein the braking part (40) is associated with the gate operating ring (14).

8. The turbine distributor as claimed in any one of claims 2 to 7, wherein the braking part is a clamping collar (40) surrounding the braking body (38).

9. The turbine distributor as claimed in claim 8, further comprising a component (44) for adjusting the tightness of the clamping collar, in particular an adjustment bolt.

10. The turbine distributor as claimed in any one of the preceding claims, wherein each connecting assembly (180) comprises a lever (20) having a forked portion (29) for connecting the lever (20) to the gate operating ring (14).

11. A Francis turbine (200) fitted with a turbine distributor (100) as claimed in any one of the preceding claims.
